# EUROPÄISCHE PATENTANMELDUNG

(11) **EP 4 646 029 A1**
(43) Veröffentlichungstag der Anmeldung: **05.11.2025**
(21) Anmeldenummer: 25169958.3
(22) Anmeldetag: 11.04.2025
(51) Int. Cl.: H05B 45/10, H05B 47/115, H05B 47/185, H05B 47/19

(54) **BETRIEBSGERÄT FÜR EIN LEUCHTMITTEL, SENSORMODUL FÜR EINE LEUCHTE UND LEUCHTE**

(30) Priorität: 30.04.2024 DE 102024112096
(71) Anmelder: Zumtobel Lighting GmbH, 6850 Dornbirn (AT)
(72) Erfinder: Block, Steffen, 6851 Dornbirn (AT)
(74) Vertreter: Rupp, Christian

(57) **Zusammenfassung**

Die vorliegende Erfindung betrifft ein Betriebsgerät für ein Leuchtmittel aufweisend: eine zur drahtlosen Kommunikation eingerichtete Steuereinheit zur Steuerung einer elektrischen Versorgung des Leuchtmittels ausgehend von dem Betriebsgerät, wenn das Leuchtmittel an dem Betriebsgerät angeschlossen ist, einen Sensoreingang zum Erhalten von Informationen ausgehend von einem Sensormodul, und einen Sensorausgang zur elektrischen Versorgung des Sensormoduls. Der Sensorausgang des Betriebsgeräts ist dazu eingerichtet, mit einem elektrischen Versorgungsanschluss des Sensormoduls zur elektrischen Versorgung des Sensormoduls elektrisch verbunden zu werden. Die Steuereinheit ist dazu eingerichtet, die elektrische Versorgung des Leuchtmittels ausgehend von dem Betriebsgerät abhängig von über den Sensoreingang erhaltenen Informationen zu steuern, wenn das Leuchtmittel an dem Betriebsgerät angeschlossen ist, und eine über den Sensorausgang des Betriebsgeräts bereitgestellte elektrische Versorgung des Sensormoduls in Reaktion auf einen durch die Steuereinheit drahtlos empfangenen entsprechenden Befehl zu beenden. Die vorliegende Erfindung betrifft ebenfalls ein entsprechendes Sensormodul sowie eine Leuchte aufweisend das Betriebsgerät und Sensormodul.

## Beschreibung

Die vorliegende Erfindung betrifft ein Betriebsgerät für ein Leuchtmittel, ein Sensormodul für eine Leuchte und eine Leuchte.

Die vorliegende Erfindung ist im Bereich der Beleuchtung mittels Leuchten. Zum Beispiel können zur Beleuchtung eines Parkhauses eine große Anzahl von Leuchten (z.B. mehrere hundert Leuchten) in dem Parkhaus installiert werden. Typischerweise sind hierbei sämtliche Leuchten gleich ausgeführt, z.B. mit einem Betriebsgerät zum elektrischen Versorgen des Leuchtmittels der Leuchte und einem Sensormodul zum Erkennen von Bewegungen, um die Anwesenheit von Objekten, wie z.B. Personen und Fahrzeugen, im Parkhaus zu erkennen. Hierfür kann das Sensormodul eine oder mehrere Radarsensoren umfassen. Eine derartige Implementierung der Leuchten erlaubt es elektrische Energie einzusparen, da bei keiner Anwesenheit von Personen und Fahrzeugen in einem Bereich des Parkhauses, die in diesem Bereich des Parkhauses installierten Leuchten, Licht mit einer reduzierten Helligkeit (d.h. geringeren Lichtintensität) abstrahlen können im Vergleich zu einem Zustand, wenn z.B. eine Person anwesend ist. Optional können die Leuchten bei keiner Anwesenheit von Personen und Fahrzeugen kein Licht abstrahlen (z.B. wenn ausreichend Tageslicht vorhanden ist).

Die Verwendung eines Leuchtentyps (d.h. alle installierten Leuchten sind gleich ausgeführt) erlaubt eine einfachere Wartung des Beleuchtungssystems, da nur ein Leuchtentyp vorrätig gehalten werden muss, um jede Leuchte des Beleuchtungssystem austauschen zu können. Ferner ist eine Installation des Beleuchtungssystems bei der Verwendung eines Leuchtentyps einfacher im Vergleich zu der Verwendung von mehreren für verschieden Installationsorte optimierte Leuchtentypen, dass es bei der Installation zu keiner falschen Zuordnung einer Leuchte hinsichtlich ihres Installationsortes kommen kann.

Andererseits hat die Verwendung gleicher Leuchten, die jeweils ein Sensormodul mit einem oder mehreren Radarsensoren zur Erfassung von Bewegung umfassen, den Nachteil, dass unter gewissen Umständen das Vorhandensein des Sensormoduls in der Leuchte in der Praxis hinsichtlich einer gewollten Beleuchtungssteuerung zu Problemen führen kann.

Zum Beispiel können sich am Installationsort einer Leuchte umfassend ein Sensormodul mit einem oder mehreren Radarsensoren zur Erfassung von Bewegung die durch das Sensormodul abgegebenen elektromagnetischen Wellen durch eine Decke oder Wand hindurch ausbreiten. Dies kann zum Beispiel der Fall sein, wenn die Decke oder die Wand aus einem für die elektromagnetischen Wellen durchlässigen Material (z.B. Holz, Gips usw.) besteht. Dies kann dazu führen, dass nicht nur eine Bewegung in einem gewollten Bereich des Raums, in dem die Leuchte installier ist, sondern auch in einem darüber liegendem oder benachbarten Raum erfasst wird. In einem solchen Fall wäre es vorteilhaft, wenn das Sensormodul der Leuchte deaktiviert (d.h. abgeschaltet) werden könnte und folglich nur Erfassungsergebnisses einer benachbarten Leuchte zur Steuerung der beiden Leuchte verwendet werden (z.B. Einschalten der Beleuchtung bei erkannter Bewegung).

Falls eine Leuchte zu nahe an Metall installiert ist, dann kann dies zu einer falschen Erfassung von Bewegung durch das Sensormodul mit dem einen oder mehreren Radarsensoren führen. In diesem Fall wäre es ebenfalls vorteilhaft, das Sensormodul der Leuchte zu deaktivieren. Ferner können sich die Sensormodule mehrerer Leuchten gegenseitig stören, falls diese Leuchte in einem Bereich sehr nahe zueinander installiert werden sollen. In diesem Fall wäre es auch vorteilhaft, wenn das Sensormodul einzelner Leuchten dieser mehreren Leuchten deaktiviert werden könnte.

Um eine Deaktivierung des Sensormoduls der Leuchte zu erreichen könnte als Sensormodul ein für eine drahtlose Kommunikation eingerichtetes Sensormodul sowie ein mit dem Sensormodul elektrisch verbundenes Betriebsgerät, das für eine drahtlose Kommunikation nicht eingerichtet ist, verwendet werden. Aufgrund der drahtlosen Kommunikationsfunktion des Sensormoduls kann dieses von extern durch drahtlose Kommunikation deaktiviert werden. Ferner kann über die drahtlose Kommunikation die Empfindlichkeit des Sensormoduls zum Erfassen einer Bewegung eingestellt werden. Wenn als Sensormodul ein zur drahtlosen Kommunikation eingerichtetes Sensormodul verwendet wird, dann führt dies zu erhöhten Kosten, da ein zur drahtlosen Kommunikation eingerichtetes Sensormodul teurer im Vergleich zu Sensormodulen ist, die lediglich zur Erkennung von Bewegung eingerichtet sind. Der Preisunterschied zwischen diesen beiden Sensormodulen kann beim sechsfachen liegen (d.h. Faktor 6). Da das Betriebsgerät selber nicht zur drahtlosen Kommunikation eingerichtet ist, müssen die beiden Beleuchtungszustände hinsichtlich erkannter Bewegung (d.h. erkannter Anwesenheit) und nicht erkannter Bewegung (d.h. erkannter Abwesenheit) im Betriebsgerät hinterlegt sein. Folglich ist das Betriebsgerät typischerweise nur in der Lage eine ungedimmte Lichtabgabe durch das Leuchtmittel der Leuchte und eine (z.B. auf 10%) gedimmte Lichtabgabe des Leuchtmittels zu steuern.

Um eine bessere Dimmfunktion des Betriebsgeräts zu ermöglichen könnte als Sensormodul ein Sensormodul ohne drahtlose Kommunikationsfunktion und ein Betriebsgerät mit drahtloser Kommunikationsfunktion verwendet werden. In diesem Fall kann das Sensormodul hinsichtlich der Steuerung des Betriebsgeräts auf Basis von Erfassungsergebnissen des Sensormoduls nur dadurch deaktiviert werden, dass die elektrische Verbindung zwischen diesen beiden Einheiten aufgehoben wird (z.B. kann das elektrische Kabel, das die beiden Einheiten verbindet, am Betriebsgerät ausgesteckt werden). Dies hat den Nachteil, dass zum Deaktivieren des Sensormoduls das Leuchtengehäuse geöffnet werden muss. Ferner kann die Empfindlichkeit des Sensormoduls nicht mehr über eine drahtlose Kommunikation eingestellt werden. Hierfür kann das Sensormodul Schalter, wie z.B. DIP-Schalter, aufweisen, über die die Empfindlichkeit eingestellt werden kann. Dies bedeutet aber, dass für das Einstellen der Empfindlichkeit des Sensormoduls ebenfalls das Leuchtengehäuse geöffnet werden muss. Das Öffnen des Leuchtengehäuses kann mit einem großen Aufwand verbunden sein, da zum Einen die Verschlussmittel des Leuchtengehäuses geöffnet und dann wieder verschlossen werden müssen und zum Anderen sich mindestens eine Person direkt an den Installationsort der Leuchte begeben muss. Dies kann zu Sicherheitsrisiken führen, falls der Installationsort der Leuchte mehrere Meter über dem Boden liegt und folglich eine entsprechende Ausrüstung, wie z.B. Leiter, Hubsteiger usw., zum Erreichen der Leuchte und folglich Öffnen des Leuchtengehäuses benötigt wird.

Eine Verwendung eines zur drahtlosen Kommunikation eingerichteten Sensormoduls und eines zur drahtlosen Kommunikation eingerichteten Betriebsgeräts zusammen in der Leuchte ist aus Kostengründen in der Praxis nicht umsetzbar.

Im Lichte der obigen Ausführungen ist es daher eine Aufgabe der vorliegenden Erfindung, eine Leuchte mit einem Sensormodul zum Erkennen von Bewegung und einem Betriebsgerät für ein Leuchtmittel bereitzustellen, bei der das Sensormodul deaktiviert werden kann, ohne dass das Leuchtengehäuse geöffnet werden muss und erhöhte Kosten durch die Verwendung eines zur drahtlosen Kommunikation eingerichteten Sensormoduls entstehen. Ferner ist es eine Aufgabe, eine derartige Leuchte bereitzustellen, bei der zumindest eine Eigenschaft des Sensormoduls, wie z.B. eine Empfindlichkeit der Bewegungserkennung, eingestellt werden kann, ohne dass das Leuchtengehäuse geöffnet werden muss und erhöhte Kosten durch die Verwendung eines zur drahtlosen Kommunikation eingerichteten Sensormoduls entstehen.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

Hierin werden die Begriffe "anschließen" und "elektrisch anschließen" als synonym verstanden. Entsprechend werden die Begriffe "verbinden" und "elektrisch verbinden" als synonym verstanden.

Gemäß einem ersten Aspekt der vorliegenden Erfindung wird ein Betriebsgerät für ein Leuchtmittel bereitgestellt. Das Leuchtmittel ist optional wenigstens eine Leuchtdiode (LED). Das Betriebsgerät weist eine zur drahtlosen Kommunikation eingerichtete Steuereinheit zur Steuerung einer elektrischen Versorgung des Leuchtmittels ausgehend von dem Betriebsgerät, wenn das Leuchtmittel an dem Betriebsgerät angeschlossen ist, auf. Das Betriebsgerät weist einen Sensoreingang zum Erhalten von Informationen ausgehend von einem Sensormodul auf. Das Betriebsgerät weist einen Sensorausgang zur elektrischen Versorgung des Sensormoduls auf. Der Sensorausgang des Betriebsgeräts ist dazu eingerichtet, mit einem elektrischen Versorgungsanschluss des Sensormoduls zur elektrischen Versorgung des Sensormoduls elektrisch verbunden zu werden. Die Steuereinheit ist dazu eingerichtet, die elektrische Versorgung des Leuchtmittels ausgehend von dem Betriebsgerät abhängig von über den Sensoreingang erhaltenen Informationen zu steuern, wenn das Leuchtmittel an dem Betriebsgerät angeschlossen ist. Die Steuereinheit ist dazu eingerichtet, eine über den Sensorausgang des Betriebsgeräts bereitgestellte elektrische Versorgung des Sensormoduls in Reaktion auf einen durch die Steuereinheit drahtlos empfangenen entsprechenden Befehl zu beenden.

Mit anderen Worten schlägt die vorliegende Erfindung ein Betriebsgerät für ein Leuchtmittel vor, das über einen Sensorausgang ein Sensormodul für eine Leuchte elektrisch versorgen kann, wenn das Sensormodul mit dem Sensorausgang elektrisch verbunden ist. Durch beenden der elektrischen Versorgung des Sensormoduls über den Sensorausgang kann das Betriebsgerät das Sensormodul deaktivieren. Folglich, wenn das Betriebsgerät und das Sensormodul zusammen in einem Leuchtengehäuse angeordnet sind, muss zum Deaktivieren des Sensormoduls das Leuchtengehäuse nicht geöffnet werden. Denn die Deaktivierung des Sensormoduls kann dadurch verursacht (d.h. getriggert werden), dass an die Steuereinheit des Betriebsgerät ein entsprechender Befehl drahtlos zugesendet wird. Die Steuereinheit kann in Reaktion auf einen solchen drahtlos empfangenen Befehl hin die an dem Sensorausgang für das Sensormodul bereitgestellte elektrische Versorgung beenden und folglich das Sensormodul abschalten. Entsprechend kann das Sensormodul dadurch aktiviert werden (d.h. eingeschaltet werden), dass die Steuereinheit das Betriebsgerät derart steuert, dass es eine elektrische Versorgung für das Sensormodul am Sensorausgang bereitstellt. Hierfür kann ein entsprechender Befehl (d.h. ein Befehl zum Einschalten des Sensormoduls) drahtlos an die Steuereinheit zugesendet werden. Die Steuereinheit kann in Reaktion auf einen solchen drahtlos empfangenen Befehl (zum Einschalten des Sensormoduls) hin das Betriebsgerät dazu veranlassen, an dem Sensorausgang für das Sensormodul eine elektrische Versorgung bereitzustellen und folglich das Sensormodul einzuschalten.

Für die drahtlose Kommunikation zur Deaktivierung des Sensormoduls muss das Sensormodul keine drahtlose Kommunikationsfunktion aufweisen. Folglich kann ein kostengünstiges Sensormodul zur Bewegungserkennung verwendet werden. Aufgrund der drahtlosen Kommunikationsfunktion der Steuereinheit kann ein flexibler Dimmbereich sowie Dimmstufen eingestellt werden, sodass das Leuchtmittel durch das Betriebsgerät über mehrere einstellbare Dimmwerte in einem einstellbaren Dimmbereich gedimmt werden kann.

Der Begriff "Treiber" kann als Synonym für den Begriff "Betriebsgerät" verwendet werden. Für den Fall, dass das Leuchtmittel wenigstens eine LED ist, kann das Betriebsgerät als "LED-Betriebsgerät" oder "LED-Treiber" bezeichnet werden. Das Betriebsgerät ist dazu eingerichtet, das Leuchtmittel (wenn dieses an dem Betriebsgerät angeschlossen ist) elektrisch zu versorgen und folglich die Lichtabgabe des Leuchtmittels zu steuern. Zum Beispiel kann das Betriebsgerät die Lichtintensität reduzieren, indem die durch das Betriebsgerät dem Leuchtmittel zugeführte elektrische Energie (z.B. die im zeitlichen Mittel zugeführter Energie) reduziert wird. Entsprechend kann die Lichtintensität erhöht werden, indem die zugeführte elektrische Energie erhöht wird. Hinsichtlich der elektrischen Versorgung des Leuchtmittels kann das Betriebsgerät auf jede bekannte Art implementiert werden. Der Fokus der vorliegenden Erfindung ist auf das Zusammenspiel des Betriebsgeräts mit einem Sensormodul für eine Leuchte gerichtet, das mit dem Sensoreingang und Sensorausgang des Betriebsgeräts elektrisch verbunden werden kann. Das Leuchtmittel kann eine oder mehrere Leuchtdioden sein. Mehrere Leuchtdioden können in Reihe und/oder parallel verschaltet sein. Das Leuchtmittel kann zusätzlich oder alternativ wenigstens einen anderen Leuchtmitteltypen umfassen oder sein.

Die Steuereinheit kann zur drahtlosen Kommunikation eingerichtet sein, indem die Steuereinheit mit einer drahtlosen Kommunikationseinheit verbunden ist oder eine solche aufweist (z.B. eine solche in der Steuereinheit integriert ist). Die Steuereinheit kann zumindest eines von einem Controller, Mikrocontroller, Prozessor, Mikroprozessor, anwedungsspezifische integrierte Schaltung (ASIC), Field Programmable Gate Array (FPGA) aufweisen. Zum Beispiel ist die Steuereinheit ein Mikrocontroller. Die Steuereinheit 11 ist nicht auf eine bestimmte drahtlose Kommunikationsart und/oder Kommunikationsprotokoll beschränkt. Zum Beispiel kann die Steuereinheit mittels Funkwellen, Licht, Infrarot usw. Informationen empfangend und/oder senden. Zum Beispiel kann die Steuereinheit mittels Bluetooth, WLAN (z.B. Wi-Fi), usw. drahtlos kommunizieren. Mit anderen Worten kann die Steuereinheit zur drahtlosen Kommunikation auf jede bekannte Art implementiert sein.

Die Steuereinheit kann in dem Betriebsgerät integriert sein, z.B. innerhalb eines Gehäuses des Betriebsgerätes angeordnet sein. Die Steuereinheit kann die über den Sensoreingang erhaltenen Informationen und/oder drahtlos empfangenen Informationen (wie z.B. einen Befehl zum Deaktivieren des Sensormoduls) für eine Steuerung des Betriebs des Betriebsgeräts verwenden. Zum Beispiel kann die Steuereinheit die über den Sensoreingang erhaltenen Informationen zur Steuerung der elektrischen Versorgung des Leuchtmittels durch das Betriebsgerät und folglich Steuerung der Lichtabgabe des Leuchtmittels verwenden.

Der elektrische Versorgungsanschluss des Sensormoduls kann auch als "elektrischer Versorgungseingang" oder "Versorgungseingang" bezeichnet werden. Der elektrische Versorgungsanschluss zur elektrischen Versorgung des Sensormoduls kann ein Strom- und/oder Spannungsversorgungsanschluss des Sensormoduls sein. Der Sensoreingang und Sensorausgangs des Betriebsgeräts kann auch als Eingang und Ausgang bezeichnet werden. Der Sensoreingang des Betriebsgeräts kann dazu eingerichtet sein, mit einem Datenausgang des Sensormoduls elektrisch verbunden zu werden. Zum Beispiel kann der Sensoreingang über wenigstens eine elektrische Leitung (z.B. in Form eines Kabels) mit den Datenausgang verbunden werden. Alternativ, kann der Sensoreingang direkt mit dem Datenausgang verbunden werden, z.B. mittels einer elektrischen Steckverbindung. Entweder kann der Sensoreingang eine Buchse und der Datenausgang einen entsprechenden Stecker umfassen, der in die Buchse gesteckt werden kann, oder der Datenausgang kann die Buchse und der Sensoreingang den entsprechenden Stecker umfassen.

Zum Beispiel kann der Sensorausgang über wenigstens eine elektrische Leitung (z.B. in Form eines Kabels) mit dem elektrischen Versorgungsanschluss des Sensormoduls verbunden werden. Alternativ, kann der Sensorausgang direkt mit dem elektrischen Versorgungsanschluss verbunden werden, z.B. mittels einer elektrischen Steckverbindung. Entweder kann der Sensorausgang eine Buchse und der elektrischen Versorgungsanschluss einen entsprechenden Stecker umfassen, der in die Buchse gesteckt werden kann, oder der elektrischen Versorgungsanschluss kann einen Buchse und der Sensorausgang den entsprechenden Stecker umfassen. Die vorliegende Erfindung ist hinsichtlich einer elektrischen Verbindung des Betriebsgeräts mit dem Sensormodul, insbesondere des Sensorausgangs des Betriebsgeräts mit dem elektrischen Versorgungsanschluss des Sensormoduls und des Sensoreingangs des Betriebsgerät mit dem Datenausgang des Sensormoduls, nicht auf eine spezifische Implementierung des Betriebsgeräts und des Sensormoduls gerichtet. Mit anderen Worten kann hinsichtlich einer elektrischen Verbindung der Sensoreingang und Sensorausgang des Betriebsgeräts sowie der Datenausgang und elektrische Versorgungsanschluss des Sensormoduls auf jede bekannte Art ausgeführt sein. Die Art der elektrischen Verbindung kann auf jede bekannte Weise erfolgen, z.B. direkt oder mittels einer entsprechenden drahtgebundenen elektrischen Verbindung.

Optional kann das Betriebsgerät über den Sensorausgang auch mit anderen elektrischen Geräten elektrisch verbunden werden.

Das Betriebsgerät kann dazu eingerichtet sein, eine Spannung am Sensorausgang bereitzustellen. Optional ist die Steuereinheit dazu eingerichtet, Informationen über den Sensorausgang durch eine Modulation der am Sensorausgang durch das Betriebsgerät bereitstellbaren Spannung zu übertragen. Zusätzlich oder alternativ kann die Steuereinheit dazu eingerichtet sein, Informationen über den Sensorausgang durch mehrere Unterbrechungen der am Sensorausgang durch das Betriebsgerät bereitstellbaren Spannung zu übertragen. Hierbei beenden die mehreren Unterbrechungen der Spannung die über den Sensorausgang bereitgestellte elektrische Versorgung des Sensormoduls nicht. Eine Anzahl und/oder eine Länge der mehreren Unterbrechungen der Spannung gibt die Informationen wieder.

Mit anderen Worten kann das Betriebsgerät mittels der elektrischen Versorgung des Sensormoduls über den Sensorausgang Informationen an das Sensormodul übertragen. Hierfür kann die Steuereinheit dazu eingerichtet sein, die zu übertragende Information mittels einer Modulation der zur elektrischen Versorgung des Sensormoduls am Sensorausgang bereitstellbare Spannung zu übertragen. Alternativ oder zusätzlich kann die Steuereinheit dazu eingerichtet sein, die zu übertragende Information mittels mehrerer Unterbrechungen der zur elektrischen Versorgung des Sensormoduls am Sensorausgang bereitstellbare Spannung zu übertragen, wobei diese mehreren Unterbrechungen nicht dazu führen, dass die am Sensorausgang des Betriebsgerät (für das Sensormodul) bereitgestellte elektrische Versorgung beendet wird und die Anzahl und/oder Länge der mehreren Unterbrechungen der Spannung die zu übertragenden Informationen wiedergibt. Das heißt, die Steuereinheit kann die Spannung am Sensorausgang zur Übertragung von Informationen hochfrequent unterbrechen, wobei die Frequenz der hochfrequenten Unterbrechung derart gewählt ist, dass eine elektrische Versorgung des Sensormoduls mit der Spannung nicht beendet wird. Die Steuereinheit kann die Informationen, die über den Sensorausgang an das Sensormodul übertragen werden können, von extern drahtlos empfangen. Folglich ermöglicht das Betriebsgerät zumindest eine Eigenschaft des Sensormoduls, wie z.B. eine Empfindlichkeit der Bewegungserkennung, einzustellen, ohne dass das Leuchtengehäuse geöffnet werden muss und erhöhte Kosten durch die Verwendung eines zur drahtlosen Kommunikation eingerichteten Sensormoduls entstehen. Denn die dem Sensormodul zuzuführende Informationen, wie zum Beispiel Informationen zum Einstellen einer Eigenschaft des Sensormoduls, können drahtlos von extern an die Steuereinheit des Betriebsgeräts gesendet werden und die Steuereinheit kann dann mittels der über den Sensorausgang bereitgestellten elektrischen Versorgung die drahtlos empfangenen Informationen an das Sensormodul weiterleiten.

Die vorstehend beschriebene Informationsübertragung über den Sensorausgang ermöglicht eine Kommunikation über den Sensorausgang ohne Verwendung eines standardisierten Kommunikationsprotokolls, wie z.B. DALI (Digital Adressable Lighting Interface) oder DALI-2. Dies ermöglicht es Kosten zu sparen. DALI und DALI-2 sind im Bereich der Beleuchtungstechnik bekannte Standards, sodass hierzu keine weiteren Ausführungen gemacht werden.

Für die oben als erstes genannte Alternative der Informationsübertragung über den Sensorausgang kann die Steuereinheit ein entsprechendes Modulationsschema verwenden, dass einem durch das Sensormodul verwendeten Demodulationsschema zum Demodulieren der über den Sensorausgang des Betriebsgeräts bereitgestellte Spannung entspricht. Die Informationen können codiert übertragen werden. Die Codierung der Informationen ist der Steuereinheit des Betriebsgeräts sowie dem Sensormodul bekannt. Für die oben als zweites genannte Alternative der Informationsübertragung über den Sensorausgang können die Anzahl und/oder Länge der Unterbrechungen der Spannung gemäß einer Codierung der Informationen sein.

Die vorliegende Erfindung ist nicht auf eine bestimmte Codierung beschränkt und folglich kann jede bekannte Codierung verwendet werden. Die Anzahl und/oder Länge der Unterbrechungen kann verschiedenen Informationen zugeordnet sein, sodass unterschiedliche Anzahlen und/oder Längen der Unterbrechungen der Spannung unterschiedlichen Informationen zugeordnet sein können. Somit können mehrere verschiedene Muster von zeitlich aufeinanderfolgenden vorstehend genannter Unterbrechungen verschiedenen Informationen entsprechen. Unabhängig davon, ob die Spannung moduliert oder mehrfach unterbrochen wird, kann die Steuereinheit dazu eingerichtet sein die Informationen digital, optional binär (d.h. in der Form von Bits), zu übertragen.

Die Informationen können eine Sensorempfindlichkeit des Sensormoduls umfassen oder sein. Die Informationen können eine Aktivierung oder Deaktivierung eines Lichtsensors des Sensormoduls für eine Tageslichterkennung umfassen oder sein. Die Informationen können Informationen hinsichtlich einer Parametrisierung und/oder einer Konfigurierung des Sensormoduls umfassen oder sein.

Optional ist die am Sensorausgang durch das Betriebsgerät bereitstellbare Spannung eine Wechselspannung. Die Steuereinheit kann dazu eingerichtet sein, die Informationen mittels einer Modulation der Amplitude, Frequenz und/oder Phase der Wechselspannung zu übertragen. Mit anderen Worten kann die Steuereinheit dazu eingerichtet sein, mittels einer Modulation wenigstens einer der Amplitude, Frequenz und Phase der Wechselspannung die Informationen zu übertragen. Das heißt, die Steuereinheit kann dazu eingerichtet sein, eine Amplitudenmodulation, eine Frequenzmodulation und/oder eine Phasenmodulation auf die Wechselspannung anzuwenden, um die Informationen mittels der Wechselspannung zu übertragen.

Optional ist die Steuereinheit dazu eingerichtet, eine Spannung über den Sensoreingang zu erhalten. Die Steuereinheit kann dazu eingerichtet sein, Informationen durch eine Demodulation der über den Sensoreingang erhaltbaren Spannung zu erhalten. Zusätzlich oder alternativ kann die Steuereinheit dazu eingerichtet sein, Informationen durch ein Erkennen mehrerer Unterbrechungen der über den Sensoreingang erhaltbaren Spannung und einer Auswertung einer Anzahl und/oder Länge der erkannten mehreren Unterbrechungen zu erhalten.

Die Übertragung von Informationen an den Sensoreingang des Betriebsgeräts kann entsprechend der Übertragung von Informationen ausgehend von dem Sensorausgang des Betriebsgeräts erfolgen. Folglich ist die vorstehende Beschreibung hinsichtlich der Übertragung von Informationen entsprechend zutreffend für den Empfang von Informationen über den Sensoreingang.

Somit kann das Betriebsgerät überwachen, ob Informationen, die es über den Sensorausgang übertragen hat, am Sensoreingang als Bestätigung eines korrekten Erhalten der Informationen zurückgemeldet werden. Eine solche Bestätigung kann alternativ durch einen Empfang einer Bestätigungsinformation (z.B. in der Form von kurzen Bestätigungsimpulsen) am Sensoreingang erfolgen.

Die Steuereinheit kann dazu eingerichtet sein, den Sensoreingang zu überwachen, um eine Informationsübertragung zu erkennen.

Um das erfindungsgemäße Betriebsgerät gemäß dem ersten Aspekt zu erreichen können die vorstehenden optionalen Merkmale und Ausführungsformen miteinander beliebig kombiniert werden.

Gemäß einem zweiten Aspekt der vorliegenden Erfindung wird ein Sensormodul für eine Leuchte bereitgestellt. Das Sensormodul weist einen elektrischen Versorgungsanschluss zum elektrischen Verbinden mit einem Sensorausgang eines Betriebsgeräts für ein Leuchtmittel auf. Das Sensormodul weist einen Datenausgang auf. Das Sensormodul weist eine elektrische Versorgungseinheit auf, die mit dem elektrischen Versorgungsanschluss elektrisch verbunden ist. Das Sensormodul weist eine Sensoreinheit zum Erfassen einer Bewegung eines Objekts auf. Das Sensormodul weist eine Steuereinheit auf, die mit der Sensoreinheit, der elektrischen Versorgungseinheit, dem elektrischen Versorgungsanschluss und dem Datenausgang elektrisch verbunden ist. Die elektrische Versorgungseinheit ist dazu eingerichtet, die Steuereinheit und die Sensoreinheit ausgehend von dem elektrischen Versorgungsanschluss elektrisch zur versorgen. Die Steuereinheit ist dazu eingerichtet, basierend auf einem Erfassungsergebnis der Sensoreinheit eine Bewegung eines Objekts festzustellen und in Reaktion hierauf ein Einschaltsignal über den Datenausgang bereitzustellen.

Die Beschreibung hinsichtlich des Betriebsgeräts des ersten Aspekts ist entsprechend zutreffend für das Sensormodul des zweiten Aspekts.

Die Leuchte kann eine Innen- oder Außenleuchte sein. Optional ist die Leuchte zur Installation in einem Gebäude, wie z.B. einer Fabrik, eines Büros, eines Wohnhauses, eines Parkhauses, einer Parkgarage usw., vorgesehen.

Die elektrische Versorgungseinheit kann hinsichtlich Ihrer Funktion zur elektrischen Versorgung der Steuereinheit und der Sensoreinheit ausgehend von dem elektrischen Versorgungsanschluss auf jede bekannte Art implementiert sein.

Die Sensoreinheit kann einen oder mehrere Sensoren (z.B. Radarsensore(n)) umfassen oder entsprechen, wobei der eine Sensor oder die mehreren Sensoren zur Erkennung einer Bewegung eines Objekts, wie z.B. einer Person, eines Fahrzeugs, usw., eingerichtet ist/sind. Die vorliegende Erfindung ist nicht auf eine bestimmte Sensoreinheit beschränkt. Folglich kann jede bekannte Sensoreinheit, die zum Erkennen von Bewegung und folglich einer Anwesenheit eines Objekts, wie z.B. einer Person oder eines Fahrzeugs, eingerichtet ist, als Sensoreinheit des Sensormoduls verwendet werden. Das Sensormodul ist vorzugsweise nicht zur drahtlosen Kommunikation eingerichtet.

Die Steuereinheit kann zumindest eines von einem Controller, Mikrocontroller, Prozessor, Mikroprozessor, anwendungsspezifische integrierte Schaltung (ASIC), Field Programmable Gate Array (FPGA) aufweisen. Zum Beispiel ist die Steuereinheit ein Mikrocontroller. Die Steuereinheit kann auf jede bekannte Art eingerichtet sein, um basierend auf dem Erfassungsergebnis der Sensoreinheit eine Bewegung und folglich die Anwesenheit eines Objekts, wie z.B. einer Person oder eines Fahrzeugs, festzustellen.

Das Einschaltsignal ist ein Einschaltsignal für das Leuchtmittel. Die Steuereinheit kann dazu eingerichtet sein, das Einschaltsignal dadurch bereitzustellen, dass es das Sensormodul veranlasst, eine Spannung am Datenausgang bereitzustellen. Entsprechend kann die Steuereinheit dazu eingerichtet sein, ein Ausschaltsignal für das Leuchtmittel dadurch bereitzustellen, dass es das Sensormodul veranlasst, keine Spannung am Datenausgang bereitzustellen.

Die Steuereinheit und Versorgungseinheit können in dem Sensormodul integriert sein, z.B. innerhalb eines Gehäuses des Sensormoduls angeordnet sein. Die Sensoreinheit kann in dem Sensormodul integriert sein, z.B. innerhalb des Gehäuses des Sensormoduls angeordnet sein. Die Sensoreinheit kann teilweise aus einem Gehäuse des Sensormoduls herausragen und optional teilweise auf dem Gehäuse angeordnet sein.

Die Steuereinheit kann dazu eingerichtet sein, den elektrischen Versorgungsanschluss zu überwachen, um eine Informationsübertragung zu erkennen.

Optional ist die Steuereinheit dazu eingerichtet, eine Spannung über den elektrischen Versorgungsanschluss zu erhalten. Die Steuereinheit kann dazu eingerichtet sein, Informationen durch eine Demodulation der über den elektrischen Versorgungsanschluss erhaltbaren Spannung zu erhalten. Zusätzlich oder alternativ kann die Steuereinheit dazu eingerichtet sein, Informationen durch ein Erkennen mehrerer Unterbrechungen der über den elektrischen Versorgungsanschluss erhaltbaren Spannung und einer Auswertung einer Anzahl und/oder Länge der erkannten mehreren Unterbrechungen zu erhalten.

Die Beschreibung der Steuereinheit des Betriebsgeräts des ersten Aspekts, insbesondere hinsichtlich der Übertragung von Informationen über den Sensorausgang des Betriebsgeräts, ist entsprechend zutreffend für die Steuereinheit des Sensormoduls.

Optional weist die elektrische Versorgungseinheit einen elektrischen Energiespeicher auf, der derart ausgestaltet ist, dass er eine elektrische Versorgung der Steuereinheit während den mehreren Unterbrechungen der über den elektrischen Versorgungsanschluss erhaltbaren Spannung aufrechterhält.

Die elektrische Versorgungseinheit kann einen oder mehrere Kondensatoren umfassen oder entsprechen. Der eine oder die mehreren Kondensatoren ist/sind derart dimensioniert, dass dieser/diese eine Menge elektrischer Energie speichern kann/können, die ausreichend ist, um eine elektrische Versorgung der Steuereinheit während den Unterbrechungen der über den elektrischen Versorgungsanschluss erhaltbaren Spannung aufrechtzuhalten. Mit anderen Worten kann der elektrische Energiespeicher einen Kapazitätspuffer umfassen oder sein, der sicherstellt, dass die Steuereinheit zu jedem Zeitpunkt hinreichend mit Spannung versorgt wird, wenn eine elektrische Versorgung über den Versorgungsanschluss erfolgt. Dies ermöglicht einen kontinuierlichen Betrieb der Steuereinheit des Sensormoduls und folglich einen kontinuierlichen Betrieb des Sensormoduls.

Optional ist die Steuereinheit dazu eingerichtet, eine Empfindlichkeit der Sensoreinheit zum Erfassen der Bewegung eines Objekts gemäß einer durch die erhaltenen Informationen wiedergegebenen Empfindlichkeit einzustellen. Zusätzlich oder alternativ kann die Steuereinheit dazu eingerichtet sein, eine Tageslichterfassung durch die Sensoreinheit zu aktivieren oder zu deaktivieren, wenn die erhaltenen Informationen entsprechendes fordern.

Die Sensoreinheit kann folglich dazu eingerichtet sein, eine Tageslichterfassung durchzuführen, d.h. das Vorhandensein von Tageslicht zu erkennen. Die Sensoreinheit umfasst hierfür einen oder mehrere entsprechende Sensoren (z.B. Tageslichtsensor(en)). Die Steuereinheit kann dazu eingerichtet sein, das Einschaltsignal in Reaktion auf ein Erkennen einer Bewegung eines Objekts am Datenausgang bereitzustellen, falls die Sensoreinheit kein Tageslicht erkennt. Folglich kann die Steuereinheit dazu eingerichtet sein, kein Einschaltsignal in Reaktion auf ein Erkennen einer Bewegung eines Objekts am Datenausgang bereitzustellen, falls die Sensoreinheit Tageslicht erkennt. In diesem Fall ist nämlich, wenn das Sensormodul in einer Leuchte angeordnet ist, am Installationsort der Leuchte bereits aufgrund des erkannten Tageslichts ausreichend Licht vorhanden, sodass ein Einschalten oder Erhöhen der Lichtintensität der Beleuchtung der Leuchte nicht notwendig ist. Folglich ist ein Einschalten oder Erhöhen der Lichtintensität der Beleuchtung der Leuchte nicht wünschenswert, da hierdurch elektrische Energie verbraucht wird. Folglich erlaubt die optionale Tageslichterkennung eine Einsparung von elektrischer Energie, wobei gleichzeitig sichergestellt wird, dass eine ausreichende Beleuchtung vorhanden ist.

Optional ist das Sensormodul dazu eingerichtet, eine Spannung am Datenausgang bereitzustellen. Die Steuereinheit kann dazu eingerichtet sein, Informationen über den Datenausgang durch eine Modulation der am Datenausgang durch das Sensormodul bereitstellbaren Spannung zu übertragen. Zusätzlich oder alternativ kann die Steuereinheit dazu eingerichtet sein, Informationen über den Datenausgang durch mehrere Unterbrechungen der am Datenausgang durch das Sensormodul bereitstellbaren Spannung zu übertragen, wobei eine Anzahl und/oder eine Länge der mehreren Unterbrechungen der Spannung die Informationen wiedergibt.

Die übertragenen Informationen können die erhaltenen Informationen oder eine Bestätigung des Erhalts dieser Informationen (z.B. in der Form von kurzen Bestätigungsimpulsen) sein.

Die Beschreibung der Steuereinheit des Betriebsgeräts des ersten Aspekts, insbesondere hinsichtlich der Übertragung von Informationen über den Sensorausgang des Betriebsgeräts, ist entsprechend zutreffend für die Steuereinheit des Sensormoduls.

Die vorstehende Beschreibung des Betriebsgeräts gemäß dem ersten Aspekt ist für das Sensormodul gemäß dem zweiten Aspekt ebenfalls zutreffend. Die vorstehende Beschreibung des Sensormoduls gemäß dem zweiten Aspekt ist für das Betriebsgerät gemäß dem ersten Aspekt ebenfalls zutreffend.

Das erfindungsgemäße Sensormodul erreicht die gleichen Vorteile wie das erfindungsgemäße Betriebsgerät.

Um das erfindungsgemäße Sensormodul gemäß dem zweiten Aspekt zu erreichen, können die vorstehenden optionalen Merkmale und Ausführungsformen miteinander beliebig kombiniert werden.

Gemäß eines dritten Aspekts der vorliegenden Erfindung wird eine Leuchte bereitgestellt. Die Leuchte weist ein Betriebsgerät gemäß dem ersten Aspekt der vorliegenden Erfindung und ein Sensormodul gemäß dem zweiten Aspekt der vorliegenden Erfindung auf. Der Sensorausgang des Betriebsgeräts ist mit dem elektrischen Versorgungsanschluss des Sensormoduls elektrisch verbunden, und der Sensoreingang des Betriebsgeräts ist mit dem Datenausgang des Sensormoduls elektrisch verbunden.

Die Leuchte kann eine Innen- oder Außenleuchte sein. Optional ist die Leuchte zur Installation in einem Gebäude, wie z.B. einer Fabrik, eines Büros, eines Wohnhauses, eines Parkhauses, einer Parkgarage usw., vorgesehen. Das Betriebsgerät und das Sensormodul können im Gehäuse der Leuchte angeordnet sein.

Die vorstehende Beschreibung des Betriebsgeräts gemäß dem ersten Aspekt und des Sensormoduls gemäß dem zweiten Aspekt ist für die Leuchte gemäß dem dritten Aspekt ebenfalls zutreffend.

Die erfindungsgemäße Leuchte erreicht die gleichen Vorteile wie das erfindungsgemäße Betriebsgerät.

Gemäß der vorliegenden Erfindung erfolgt die elektrische Versorgung des erfindungsgemäßen Sensormoduls ausschließlich über den elektrischen Versorgungsanschluss des Sensormoduls. Folglich wenn der elektrische Versorgungsanschluss des Sensormoduls mit dem Sensorausgang des erfindungsgemäßen Betriebsgeräts verbunden ist, erfolgt die elektrische Versorgung des Sensormoduls ausschließlich ausgehend von dem Betriebsgerät, und zwar über den Sensorausgang des Betriebsgeräts.

Folglich wenn bei einer erfindungsgemäßen Leuchte das Sensormodul nicht aktiviert sein soll (d.h. deaktiviert bzw. abgeschaltet sein soll), dann kann durch Beenden der am Sensorausgang des Betriebsgeräts bereitgestellten elektrischen Versorgung das Sensormodul vollständig abgeschaltet werden. Ein Befehl, der das Abschalten des Sensormoduls und folglich eine Beendigung der elektrischen Versorgung über den Sensorausgang des Betriebsgeräts auslöst (d.h. fordert), kann durch die Steuereinheit des Betriebsgeräts drahtlos empfangen werden. Folglich kann über die Fähigkeit des Betriebsgeräts, die elektrische Versorgung über den Sensorausgang durch eine drahtlose Kommunikation zu schalten, d.h. ein- und auszuschalten, erreicht werden, dass das Sensormodul abgeschaltet werden kann, ohne das Gehäuse der Leuchte öffnen zu müssen.

Für eine Informationsübertragung von dem erfindungsgemäßen Betriebsgerät an das erfindungsgemäße Sensormodul (wenn der Versorgungsanschluss des Sensormoduls mit dem Sensorausgang des Betriebsgerät elektrisch verbunden ist) kann die am Sensorausgang durch das Betriebsgerät zur elektrischen Versorgung des Sensormoduls bereitgestellte Spannung moduliert werden. Zum Beispiel kann das Betriebsgerät, insbesondere die Steuereinheit, für eine Power Line Communication (PLC) eingerichtet sein. Zusätzlich oder alternativ kann zur Informationsübertragung die am Sensorausgang bereitgestellte Spannung hochfrequent aus- und eingeschaltet werden, d.h. mehrfach hochfrequent unterbrochen werde. Dieses hochfrequente Aus- und Einschalten der Spannungen, d.h. diese mehreren Unterbrechungen der Spannung, ist/sind derart, dass hierdurch eine elektrische Versorgung für das Sensormodul am Sensormodul weiterhin besteht. Mit anderen Worten wird die elektrische Versorgung ausgehend von dem Sensorausgang durch das hochfrequente Aus- und Einschalten der Spannung nicht gestört und folglich nicht beendet, sodass das Sensormodul über den Sensorausgang des Betriebsgeräts unabhängig von der Informationsübertragung über den Sensorausgang elektrisch versorgt werden kann. Das erfindungsgemäße Sensormodul ist derart eingerichtet, dass es die über den elektrischen Versorgungsanschluss erhaltene Spannung demodulieren und folglich die mittels der Spannung übertragene Informationen erhalten kann.

Um sicherzustellen, dass das erfindungsgemäße Sensormodul tatsächlich die korrekten Informationen (z.B. korrekte Konfiguration), die ausgehend von dem erfindungsgemäßen Betriebsgerät über den Sensorausgang, wie vorstehend beschrieben, übertragen wurden, erhalten und übernommen hat, kann das Sensormodul über seinen Datenausgang die erhaltenen und eingestellten Informationen (z.B. Konfigurationen) an das Betriebsgerät zurückmelden. Das Betriebsgerät kann die über den Sensoreingang erhaltenen Informationen, wie vorstehend beschrieben, erhalten.

Zum Bestätigen des korrekten Erhaltens von Informationen, die das Sensormodul über den Versorgungsanschluss erhalten hat und folglich über den Sensorausgang des Betriebsgeräts übertragen wurden, kann das Sensormodul über den Datenausgang die empfangenen Informationen, optional widerholt, ausgeben. Zusätzlich oder alternativ kann das Sensormodul über den Datenausgang einen aus den empfangenen Informationen abgeleiteten Wert über den Datenausgang ausgeben. Zusätzlich oder alternativ kann das Sensormodul über den Datenausgang eine Empfangsbestätigung (z.B. ein Acknowledgement Signal) ausgeben. Die Ausgabe über den Datenausgang kann wie vorstehend beschrieben erfolgen.

Nachfolgend wird eine detaillierte Beschreibung der Figuren gegeben. Darin zeigt:
- **Figur 1**: ein Beispiel eines erfindungsgemäßen Betriebsgeräts für ein Leuchtmittel,
- **Figur 2**: ein Beispiel eines erfindungsgemäßen Sensormoduls für eine Leuchte,
- **Figur 3**: zwei Beispiele für eine erfindungsgemäße Übertragung von Informationen zwischen einem erfindungsgemäßen Betriebsgerät und einem erfindungsgemäßen Sensormodul, unf
- **Figur 4**: ein Beispiel für eine erfindungsgemäße Leuchte.

In den Figuren sind sich entsprechende Elemente mit denselben Bezugszeichen versehen.

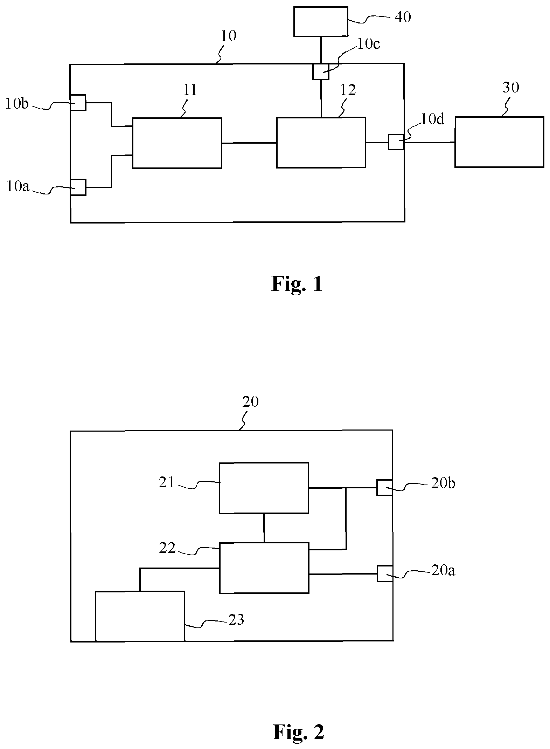

**Figur 1** zeigt ein Beispiel eines erfindungsgemäßen Betriebsgeräts für ein Leuchtmittel. Das Betriebsgerät der Figur 1 ist ein Beispiel des Betriebsgeräts gemäß dem ersten Aspekt der vorliegenden Erfindung. Die vorstehende Beschreibung des Betriebsgeräts gemäß dem ersten Aspekt der vorliegenden Erfindung ist für das Betriebsgerät der Figur 1 entsprechend zutreffend.

Das Betriebsgerät 10 der Figur 1 ist ein Betriebsgerät für ein Leuchtmittel 30. Das Leuchtmittel 30 ist optional wenigstens eine Leuchtdiode (LED). Das Leuchtmittel ist nicht auf LED(s) beschränkt und kann folglich zusätzlich oder alternative jede andere bekannte Leuchtmittelart sein oder umfassen. Im Falle von mehreren Leuchtdioden, können diese in Reihe und/oder parallel zueinander verschaltet sein.

Das Betriebsgerät 10 weist eine zur drahtlosen Kommunikation eingerichtete Steuereinheit 11 zur Steuerung einer elektrischen Versorgung des Leuchtmittels 30 ausgehend von dem Betriebsgerät 10, wenn das Leuchtmittel 30 an dem Betriebsgerät 10 angeschlossen ist, auf. Wie in Figur 1 gezeigt, kann das Betriebsgerät 10 einen Leuchtmittelanschluss 10d zum elektrischen Anschließen des Leuchtmittels 30 an dem Betriebsgerät 10 aufweisen. Mit anderen Worten kann das Leuchtmittel 30 mit dem Leuchtmittelanschluss 10d elektrisch verbunden werden, um ausgehend von dem Betriebsgerät 10 elektrisch versorgt werden zu können. Wenn das Leuchtmittel 30 an dem Betriebsgerät 10 (z.B. über den Leuchtmittelanschluss 10d) elektrisch angeschlossen ist, dann kann dieser Zustand als angeschlossener Zustand bezeichnet werden.

Zur elektrischen Versorgung des Leuchtmittels 30 (im angeschlossenen Zustand) kann das Betriebsgerät 10 eine elektrische Versorgungsschaltung 12 sowie einen Versorgungsanschluss 10c aufweisen. Über den Versorgungsanschluss 10c kann das Betriebsgerät mit einer elektrischen Energiequelle, wie z.B. dem Stromnetz, einem elektrischen Energiespeicher (z.B. eine Batterie), eine elektrische Versorgungsleitung (z.B. in Form eine Versorgungsbusses), eine elektrische Versorgungseinheit (z.B. elektrische Versorgungseinheit einer Leuchte), usw., elektrisch verbunden werden. Zusätzlich oder alternativ kann das Betriebsgerät einen internen elektrischen Energiespeicher (z.B. eine Batterie, die optional wiederaufladbar ist) aufweisen (in Figur 1 nicht gezeigt). Die elektrische Versorgungsschaltung 12 kann ausgehend von über den elektrischen Versorgungsanschluss 10c erhaltene elektrische Energie und/oder ausgehend von einem optionalen internen Energiespeicher des Betriebsgeräts 10 erhaltene elektrische Energie eine elektrische Versorgung für das Leuchtmittel 30 an dem Leuchtmittelanschluss 10d bereitstellen. Hierzu kann die Steuereinheit 11 dazu eingerichtet sein, die elektrische Versorgungsschaltung zu steuern, einen Strom und/oder eine Spannung an dem Leuchtmittelanschluss 10d bereitzustellen. Die elektrische Versorgungsschaltung 12 kann wenigstens einen Leistungswandler umfassen, der durch die Steuereinheit 11 steuerbar ist. Ausgehend von dem Versorgungsanschluss 10c und/oder der elektrischen Versorgungsschaltung 12 können auch die elektrischen Komponenten, wie z.B. die Steuereinheit 11, des Betriebsgeräts 10 elektrisch versorgt werden. Hinsichtlich der elektrischen Versorgung des Leuchtmittel 30 und somit Steuerung der Lichtabgabe durch das Leuchtmittel 30 ist das Betriebsgerät nicht auf eine bestimmte Implementierung beschränkt. Folglich kann das Betriebsgerät diesbezüglich auf jede bekannte Art implementiert werden. Der Fokus der vorliegenden Erfindung ist auf das Zusammenspiel des Betriebsgeräts 10 mit einem Sensormodul für eine Leuchte, wie z.B. dem Sensormodul 20 der Figur 2, gerichtet.

Folglich weist das Betriebsgerät 10 einen Sensoreingang 10a zum Erhalten von Informationen ausgehend von einem Sensormodul (wie z.B. das Sensormodul 20 der Figur 2) auf. Das Betriebsgerät 10 weist einen Sensorausgang 10b zur elektrischen Versorgung des Sensormoduls auf. Der Sensorausgang 10b des Betriebsgeräts 10 ist dazu eingerichtet, mit einem elektrischen Versorgungsanschluss des Sensormoduls zur elektrischen Versorgung des Sensormoduls elektrisch verbunden zu werden. Die Steuereinheit 11 ist dazu eingerichtet, die elektrische Versorgung des Leuchtmittels 30 ausgehend von dem Betriebsgerät 10 (z.B. ausgehend von der elektrischen Versorgungsschaltung 12) abhängig von über den Sensoreingang 10a erhaltenen Informationen zu steuern, wenn das Leuchtmittel 30 an dem Betriebsgerät 10 angeschlossen ist. Die Steuereinheit 11 ist dazu eingerichtet, eine über den Sensorausgang 10b des Betriebsgeräts 10 bereitgestellte elektrische Versorgung des Sensormoduls in Reaktion auf einen durch die Steuereinheit 11 drahtlos empfangenen entsprechenden Befehl zu beenden. Die elektrische Versorgung des Sensormoduls über den Sensorausgang 10b kann ausgehend von der elektrischen Versorgungsschaltung 12 und/oder einer zweiten elektrischen Versorgungsschaltung (in Figur 1 nicht gezeigt) erfolgen. Die Steuereinheit 11 ist dazu eingerichtet die elektrische Versorgung des Sensormoduls zu steuern. Zum Beispiel kann das Betriebsgerät (z.B. die elektrische Versorgungsschaltung 12 und/oder eine optionale zweite elektrische Versorgungsschaltung) eingerichtet sein, eine Spannung und/oder einen Strom am Sensorausgang 10b bereitzustellen. Hinsichtlich der Art und Weise, wie das Betriebsgerät 10 dazu eingerichtet ist, am Sensorausgang 10b eine elektrische Versorgung (z.B. eine Spannung) für das Sensormodul bereitzustellen, ist die vorliegende Erfindung nicht auf eine bestimmte Implementierung beschränkt. Mit anderen Worten kann das Betriebsgerät diesbezüglich auf jede bekannte Art implementiert sein.

Die Steuereinheit 11 kann zumindest eines von einem Controller, Mikrocontroller, Prozessor, Mikroprozessor, anwendungsspezifische integrierte Schaltung (ASIC), Field Programmable Gate Array (FPGA) aufweisen. Zum Beispiel ist die Steuereinheit 11 ein Mikroprozessor. Die Steuereinheit 11 kann zur drahtlosen Kommunikation eingerichtet sein, indem die Steuereinheit 11 mit einer drahtlosen Kommunikationseinheit verbunden ist oder eine solche aufweist (z.B. eine solche in der Steuereinheit integriert ist). Die Steuereinheit 11 ist nicht auf eine bestimmte drahtlose Kommunikationsart und/oder Kommunikationsprotokoll beschränkt. Zum Beispiel kann die Steuereinheit mittels Funkwellen, Licht, Infrarot usw. Informationen empfangend und/oder senden. Zum Beispiel kann die Steuereinheit mittels Bluetooth, WLAN (z.B. Wi-Fi), usw. drahtlos kommunizieren. Mit anderen Worten kann die Steuereinheit zur drahtlosen Kommunikation auf jede bekannte Art implementiert sein.

Die Steuereinheit 11 und die elektrische Versorgungsschaltung 12 können in einem Gehäuse des Betriebsgeräts angeordnet sein.

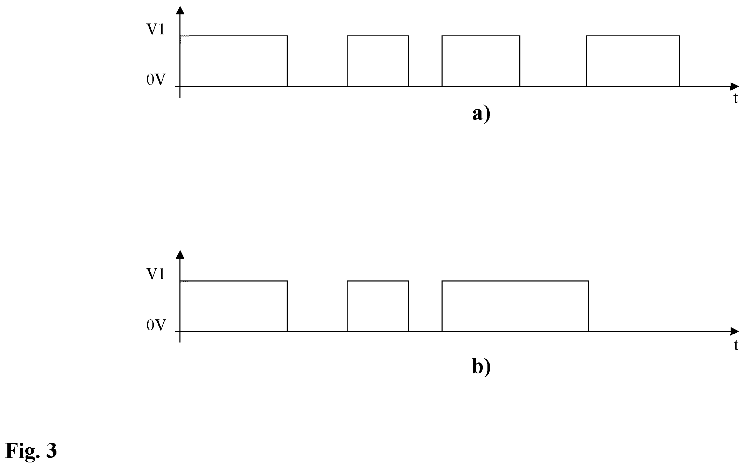

Für weitere Informationen zum Betriebsgerät der Figur 1 wird auf die Beschreibung der Figuren 2 und 3 sowie die vorstehende Beschreibung des erfindungsgemäßen Betriebsgeräts verwiesen.

**Figur** 2 zeigt ein Beispiel eines erfindungsgemäßen Sensormoduls für eine Leuchte. Das Sensormodul der Figur 2 ist ein Beispiel des Sensormoduls gemäß dem zweiten Aspekt der vorliegenden Erfindung. Die vorstehende Beschreibung des Sensormoduls gemäß dem zweiten Aspekt der vorliegenden Erfindung ist für das Sensormodul der Figur 2 entsprechend zutreffend.

Das Sensormodul 20 der Figur 2 ist ein Sensormodul für eine Leuchte. Das Sensormodul 20 weist einen elektrischen Versorgungsanschluss 20b zum elektrischen Verbinden mit einem Sensorausgang eines Betriebsgeräts für ein Leuchtmittel (wie z.B. den Sensorausgang 10b des Betriebsgeräts 10 der Figur 1) auf. Folglich kann das Sensormodul 20, insbesondere die elektrischen Komponenten des Sensormoduls 20, über den Versorgungsanschluss 20b von außerhalb elektrisch versorgt werden. Das Sensormodul 20 weist einen Datenausgang 20a auf. Über den Datenausgang 20a kann das Sensormodul 20 Informationen nach außerhalb ausgeben. Der Datenausgang 20a ist dazu eingerichtet mit einem entsprechenden Anschluss eines elektrischen Geräts (wie z.B. dem Sensoreingang 10b des Betriebsgeräts 10 der Figur 1) elektrisch verbunden zu werden. Dies erlaubt es dem Sensormodul 20 über den Datenausgang 20a Informationen an das an dem Datenausgang 20a angeschlossene elektrische Gerät (wie z.B. das Betriebsgerät 10 der Figur 1) auszugeben.

Das Sensormodul 20 weist eine elektrische Versorgungseinheit 21 auf, die mit dem elektrischen Versorgungsanschluss 20b elektrisch verbunden ist. Das Sensormodul 20 weist eine Sensoreinheit 23 zum Erfassen einer Bewegung eines Objekts auf. Die Sensoreinheit kann hierzu auf jede bekannte Art implementiert sein, z.B. eine oder mehrere zur Bewegungserkennung eingerichtete Sensoren, wie z.B. eine oder mehrere Radarsensoren, umfassen. Das Sensormodul 20 weist eine Steuereinheit 22 auf, die mit der Sensoreinheit 23, der elektrischen Versorgungseinheit 23, dem elektrischen Versorgungsanschluss 20b und dem Datenausgang 20a elektrisch verbunden ist. Die Steuereinheit 22 kann folglich eine über den Versorgungsanschluss 20b zugeführte Spannung oder zugeführten Strom von dem Versorgungsanschluss 20b direkt erhalten. Dies dient nicht der elektrischen Versorgung der Steuereinheit 22, da diese ausgehend von der elektrischen Versorgungseinheit 23 erfolgt. Die Steuereinheit 22 kann zumindest eines von einem Controller, Mikrocontroller, Prozessor, Mikroprozessor, anwendungsspezifische integrierte Schaltung (ASIC), Field Programmable Gate Array (FPGA) aufweisen. Zum Beispiel ist die Steuereinheit 22 ein Mikroprozessor.

Die elektrische Versorgungseinheit 21 ist dazu eingerichtet, die Steuereinheit 22 und die Sensoreinheit 23 ausgehend von dem elektrischen Versorgungsanschluss 20b elektrisch zur versorgen. Hierzu kann die elektrische Versorgungseinheit 21 auf jede dem Fachmann bekannte Art implementiert sein. Die Sensoreinheit 23 kann direkt oder über die Steuereinheit 22 ausgehend von der elektrischen Versorgungseinheit 21 elektrisch versorgt werden. Die Steuereinheit 22 ist dazu eingerichtet, basierend auf einem Erfassungsergebnis der Sensoreinheit 23 eine Bewegung eines Objekts festzustellen und in Reaktion hierauf ein Einschaltsignal über den Datenausgang 20a bereitzustellen. Zum Beispiel kann das Einschaltsignal das Einschalten einer Beleuchtung verursachen. Diese Beleuchtung kann eine Beleuchtung eines durch ein Betriebsgerät elektrisch versorgten Leuchtmittels (z.B. die Beleuchtung einer Leuchte, wenn das Betriebsgerät und Leuchtmittel Bestandteil der Leuchte sind) sein. Die Steuereinheit 22 kann dazu eingerichtet sein, über den Datenausgang 20a Informationen auszugeben, d.h. nach außerhalb zu kommunizieren.

Für weitere Informationen zum Sensormodul 20 der Figur 2 wird auf die Beschreibung der Figuren 1 und 3 sowie die vorstehende Beschreibung des erfindungsgemäßen Sensormoduls verwiesen.

**Figur 3** zeigt zwei Beispiele für eine erfindungsgemäße Übertragung von Informationen zwischen einem erfindungsgemäßen Betriebsgerät und einem erfindungsgemäßen Sensormodul. Das Betriebsgerät kann das Betriebsgerät der Figur 1 sein. Das Sensormodul kann das Sensormodul der Figur 2 sein. In der nachfolgenden Beschreibung wird auf das Betriebsgerät der Figur 1 und das Sensormodul der Figur 2 Bezug genommen.

Informationen können ausgehend vom Sensorausgang 10b des Betriebsgeräts 10 an den Versorgungsanschluss 20b des Sensormoduls 20 oder ausgehend vom Datenausgang 20b des Sensormoduls an den Sensoreingang 10a des Betriebsgeräts 10 übertragen werden. Gemäß einer Alternative kann hierfür eine Spannung am Sensorausgang 10a bzw. Datenausgang 20b entsprechend der zu übertragenden Informationen moduliert werden. Zum Erhalten der derart übertragenen Informationen kann dann die Steuereinheit 21 des Sensormoduls 20 bzw. die Steuereinheit 11 des Betriebsgeräts 10 die am elektrischen Versorgungsanschluss 20a bzw. am Sensoreingang 10b erhaltene Spannung entsprechend demodulieren.

Gemäß einer anderen Alternative kann die Spannung am Sensorausgang 10a bzw. Datenausgang 20b mehrfach unterbrochen werden, wobei die mehreren Unterbrechungen nicht zu einer Beendigung einer elektrischen Versorgung des Sensormoduls 20 führen. Die Anzahl und/oder Länge der mehreren Unterbrechungen gibt die zu übertragene Informationen wieder. Zum Erhalten der derart übertragenen Informationen kann dann die Steuereinheit 21 des Sensormoduls 20 bzw. die Steuereinheit 11 des Betriebsgeräts 10 die am elektrischen Versorgungsanschluss 20a bzw. am Sensoreingang 10b erhaltenen Spannung entsprechend demodulieren, d.h. anhand der Anzahl und/oder Länge der mehreren Unterbrechungen der Spannung auf die Informationen schließen. Figuren 3a) und 3b) zeigen jeweils ein Beispiel wie die Spannung V1 hochfrequent unterbrochen werden kann (d.h. derart unterbrochen wird, dass eine elektrische Versorgung des Sensormoduls nicht beendet wird). Zum Beispiel kann die Anzahl und Länge der in Figur 3 a) gezeigten Unterbrechungen der Spannung V1 einen ersten Empfindlichkeitswert für die Sensoreinheit des Sensormoduls und die Anzahl und Länge der in Figur 3 b) gezeigten Unterbrechungen der Spannung V1 einen zweiten Empfindlichkeitswert für die Sensoreinheit des Sensormoduls wiedergeben.

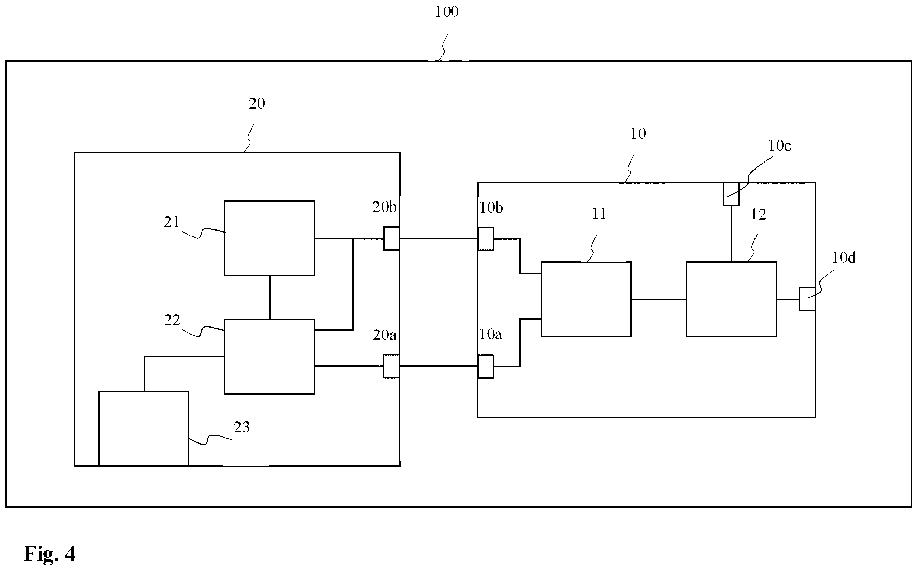

**Figur 4** zeigt ein Beispiel für eine erfindungsgemäße Leuchte. Die Leuchte der Figur 4 ist ein Beispiel der Leuchte gemäß dem dritten Aspekt der vorliegenden Erfindung. Die vorstehende Beschreibung der Leuchte gemäß dem dritten Aspekt der vorliegenden Erfindung ist für die Leuchte der Figur 4 entsprechend zutreffend.

Wie in Figur 4 gezeigt, weist die Leuchte 100 das Betriebsgerät 10 der Figur 1 und das Sensormodul 20 der Figur 2 auf. Folglich wird zur Beschreibung des Betriebsgeräts 10 und des Sensormoduls 20 der Leuchte 100 auf die Beschreibung der Figuren 1 bis 3 verwiesen. Wie in Figur 4 gezeigt, ist der Sensorausgang 10b des Betriebsgeräts 10 mit dem elektrischen Versorgungsanschluss 20b des Sensormoduls 20 elektrisch verbunden, und der Sensoreingang 10a des Betriebsgeräts 10 ist mit dem Datenausgang 20a des Sensormoduls 20 elektrisch verbunden.

Für weiter Informationen zur Leuchte der Figur 4 wird auf die vorstehende Beschreibung der erfindungsgemäßen Leuchte sowie die Beschreibung der Figuren 1, 2 und 3 verwiesen.

## Patentansprüche

1. Betriebsgerät (10) für ein Leuchtmittel (30), optional wenigstens eine Leuchtdiode, LED, wobei das Betriebsgerät (10) aufweist:
- eine zur drahtlosen Kommunikation eingerichtete Steuereinheit (11) zur Steuerung einer elektrischen Versorgung des Leuchtmittels (30) ausgehend von dem Betriebsgerät (10), wenn das Leuchtmittel (30) an dem Betriebsgerät (10) angeschlossen ist,
- einen Sensoreingang (10a) zum Erhalten von Informationen ausgehend von einem Sensormodul (20), und
- einen Sensorausgang (10b) zur elektrischen Versorgung des Sensormoduls (20); wobei
- der Sensorausgang (10b) des Betriebsgeräts (10) dazu eingerichtet ist, mit einem elektrischen Versorgungsanschluss (20b) des Sensormoduls (20) zur elektrischen Versorgung des Sensormoduls (20) elektrisch verbunden zu werden, und
- die Steuereinheit (11) dazu eingerichtet ist,
- die elektrische Versorgung des Leuchtmittels (30) ausgehend von dem Betriebsgerät (10) abhängig von über den Sensoreingang (10a) erhaltenen Informationen zu steuern, wenn das Leuchtmittel (30) an dem Betriebsgerät (10) angeschlossen ist, und
- eine über den Sensorausgang (10b) des Betriebsgeräts (10) bereitgestellte elektrische Versorgung des Sensormoduls (20) in Reaktion auf einen durch die Steuereinheit (11) drahtlos empfangenen entsprechenden Befehl zu beenden.

2. Betriebsgerät (10) gemäß Anspruch 1, wobei
- das Betriebsgerät (10) eingerichtet ist, eine Spannung am Sensorausgang (10b) bereitzustellen; und wobei
- die Steuereinheit (10) dazu eingerichtet ist, Informationen über den Sensorausgang (10b) durch eine Modulation der am Sensorausgang (10b) durch das Betriebsgerät (10) bereitstellbaren Spannung zu übertragen, und/oder
- die Steuereinheit (10) dazu eingerichtet ist, Informationen über den Sensorausgang (10b) durch mehrere Unterbrechungen der am Sensorausgang (10b) durch das Betriebsgerät (10) bereitstellbaren Spannung zu übertragen, wobei
- die mehreren Unterbrechungen der Spannung die über den Sensorausgang (10b) bereitgestellte elektrische Versorgung des Sensormoduls (20) nicht beenden, und
- eine Anzahl und/oder eine Länge der mehreren Unterbrechungen der Spannung die Informationen wiedergibt.

3. Betriebsgerät (10) gemäß Anspruch 2, wobei
- die am Sensorausgang (10b) durch das Betriebsgerät bereitstellbare Spannung eine Wechselspannung ist, und
- die Steuereinheit (11) dazu eingerichtet ist, die Informationen mittels einer Modulation der Amplitude, Frequenz und/oder Phase der Wechselspannung zu übertragen.

4. Betriebsgerät (10) gemäß einem der vorhergehenden Ansprüche, wobei
- die Steuereinheit dazu eingerichtet ist, eine Spannung über den Sensoreingang zu erhalten, und wobei
- die Steuereinheit (11) dazu eingerichtet ist
- Informationen durch eine Demodulation der über den Sensoreingang (10a) erhaltbaren Spannung zu erhalten, und/oder
- Informationen durch ein Erkennen mehrerer Unterbrechungen der über den Sensoreingang (10a) erhaltbaren Spannung und einer Auswertung einer Anzahl und/oder Länge der erkannten mehreren Unterbrechungen zu erhalten.

5. Sensormodul (20) für eine Leuchte (100), wobei das Sensormodul (20) aufweist
- einen elektrischen Versorgungsanschluss (20b) zum elektrischen Verbinden mit einem Sensorausgang (10b) eines Betriebsgeräts (10) für ein Leuchtmittel (30),
- einen Datenausgang (20a),
- eine elektrische Versorgungseinheit (21), die mit dem elektrischen Versorgungsanschluss (20b) elektrisch verbunden ist,
- eine Sensoreinheit (23) zum Erfassen einer Bewegung eines Objekts, und
- eine Steuereinheit (22), die mit der Sensoreinheit (23), der elektrischen Versorgungseinheit (21), dem elektrischen Versorgungsanschluss (20b) und dem Datenausgang (20a) elektrisch verbunden ist; wobei
- die elektrische Versorgungseinheit (21) dazu eingerichtet ist, die Steuereinheit (22) und die Sensoreinheit (23) ausgehend von dem elektrischen Versorgungsanschluss (20b) elektrisch zur versorgen, und
- die Steuereinheit (22) dazu eingerichtet ist, basierend auf einem Erfassungsergebnis der Sensoreinheit (23) eine Bewegung eines Objekts festzustellen und in Reaktion hierauf ein Einschaltsignal über den Datenausgang (20a) bereitzustellen.

6. Sensormodul (20) gemäß Anspruch 5, wobei
- die Steuereinheit (22) dazu eingerichtet ist, eine Spannung über den elektrischen Versorgungsanschluss (20b) zu erhalten, und wobei
- die Steuereinheit (22) dazu eingerichtet ist
- Informationen durch eine Demodulation der über den elektrischen Versorgungsanschluss (20b) erhaltbaren Spannung zu erhalten, und/oder
- Informationen durch ein Erkennen mehrerer Unterbrechungen der über den elektrischen Versorgungsanschluss (20b) erhaltbaren Spannung und einer Auswertung einer Anzahl und/oder Länge der erkannten mehreren Unterbrechungen zu erhalten.

7. Sensormodul (20) gemäß Anspruch 6, wobei
- die elektrische Versorgungseinheit (22) einen elektrischen Energiespeicher aufweist, der derart ausgestaltet ist, dass er eine elektrische Versorgung der Steuereinheit (22) während den mehreren Unterbrechungen der über den elektrischen Versorgungsanschluss erhaltbaren Spannung aufrechterhält.

8. Sensormodul (20) gemäß Anspruch 6 oder 7, wobei
- die Steuereinheit (22) dazu eingerichtet ist, eine Empfindlichkeit der Sensoreinheit (23) zum Erfassen der Bewegung eines Objekts gemäß einer durch die erhaltenen Informationen wiedergegebenen Empfindlichkeit einzustellen, und/oder
- die Steuereinheit (22) dazu eingerichtet ist, eine Tageslichterfassung durch die Sensoreinheit (23) zu aktivieren oder zu deaktivieren, wenn die erhaltenen Informationen entsprechendes fordern.

9. Sensormodul (20) gemäß einem der Ansprüche 5 bis 8, wobei
- das Sensormodul (20) eingerichtet ist, eine Spannung am Datenausgang (20a) bereitzustellen; und wobei
- die Steuereinheit (22) dazu eingerichtet ist, Informationen über den Datenausgang (20a) durch eine Modulation der am Datenausgang (20a) durch das Sensormodul (20) bereitstellbaren Spannung zu übertragen, und/oder
- die Steuereinheit (22) dazu eingerichtet ist, Informationen über den Datenausgang (20a) durch mehrere Unterbrechungen der am Datenausgang (20a) durch das Sensormodul (20) bereitstellbaren Spannung zu übertragen, wobei eine Anzahl und/oder eine Länge der mehreren Unterbrechungen der Spannung die Informationen wiedergibt.

10. Leuchte (100) aufweisend
- ein Betriebsgerät (10) gemäß einem der Ansprüche 1 bis 4, und
- ein Sensormodul (20) gemäß einem der Ansprüche 5 bis 9; wobei
- der Sensorausgang (10b) des Betriebsgeräts (10) mit dem elektrischen Versorgungsanschluss (20b) des Sensormoduls (20) elektrisch verbunden ist, und
- der Sensoreingang (10a) des Betriebsgeräts (10) mit dem Datenausgang (20a) des Sensormoduls (20) elektrisch verbunden ist.
